# EUROPEAN PATENT SPECIFICATION

(11) **EP 4 237 217 B1**
(45) Date of publication and mention of the grant of the patent: **12.11.2025**
(21) Application number: 21806028.3
(22) Date of filing: 22.10.2021
(51) Int. Cl.: B29C 33/60, C21D 1/673, B21D 37/18

(54) **HOT FORGING PROCESS AND MOULD FOR CARRYING OUT SAID PROCESS**
HEISSPRÄGEVERFAHREN UND FORM ZUR DURCHFÜHRUNG DIESES VERFAHRENS
PROCÉDÉ DE FORGEAGE À CHAUD ET MOULE POUR LA MISE EN OEUVRE DUDIT PROCÉDÉ

(30) Priority: 28.10.2020 IT 202000025600
(43) Date of publication of application: 06.09.2023
(73) Proprietor: Angeloni, Giovanni Battista, 25044 Capo di Ponte (BS) (IT)
(72) Inventor: Angeloni, Giovanni Battista, 25044 Capo di Ponte (BS) (IT)
(74) Representative: Pes, Matteo
(86) International application number: PCT/IB2021/059748
(87) International publication number: WO 2022/090878

(56) References cited:
- EP-A2- 1 186 361
- DE-A1- 102011 116 885

## Description

### Field of the invention

In its most general aspect, the present invention refers to the technical sector of hot forging and, in particular, the invention relates to a hot forging process and a mould for carrying out the aforesaid process.

### State of the art

As is known, hot forging is a process which provides for the deformation of a preheated billet generally made of metal material, through a mould consisting of two half-moulds, so as to achieve a semi-finished product which replicates the geometry of the desired final product.

As far as the half-moulds are concerned, it should be stated that they have respective recesses which are the negative of the final geometry of the semi-finished product to be achieved and, thus, a correct design of the mould, and therefore of the half-moulds, is necessary, since it is necessary to take into account aspects such as: draft angles; corner radii that must not be too small to allow the metal material to flow across the recess and fill the mould correctly; the so-called stock allowance which must be removed by subsequent mechanical machining operations; and the dimensional shrinkage which undergoes the material used after cooling.

In this regard, a half-mould is generally composed of a die which contains the recess corresponding to the negative of the piece to be moulded (impression) and a mould holder which contains a recess in which the die is housed. Sometimes a half-mould can be composed of a greater number of components, e.g. it can comprise a die made of various pieces, with an increase in the respective complexity of the mould but with considerable cost saving for its implementation.

The die, in fact, is usually made of a material which is more performing than that used for the mould holder, since it must be in direct contact with the hot billet and since it is subjected to very high stresses. The mould holder, on the other hand, is not subjected to the same high stresses as the die and being very massive with respect to the same die, much is saved by using, for its implementation, a cheaper material. Generally, a mould holder of the type considered here consists of a forged steel bloom.

As far as the starting billet is concerned, it should be stated that it generally has a volume slightly higher than the volume of the mould recess, to ensure that during the forging process the material fills the entire mould recess, while the excess material comes out of the mould at the dividing line between the half-moulds and forms burrs which are removed at a later time.

In this respect, the forging process provides for a first step of heating the material forming the billet, which plays a fundamental role because it allows to bring the material to be processed to a temperature higher than the recrystallisation temperature; thus, the material becomes more ductile and deformable allowing a complete filling of the mould even for complex geometries.

There follows a forging step in which one of the two half-moulds, usually the lower one, remains fixed while the other, usually the upper one, is lowered by a press which applies a pressure sufficient to deform the billet until the desired geometry is achieved. The presses can be mechanical or hydraulic and can generally apply forces of the order of hundreds of tons, depending on the volume of the piece to be moulded.

Once the forging step has been completed, the temperature of the semi-finished product inside the mould is high and the mechanical properties of the semi-finished product are poor, so that it is necessary to wait for a minimum time interval during which the mould removes heat from the semi-finished product until it reaches sufficiently low temperatures, such as not to cause distortions during the subsequent ejection step.

In this regard, to increase the heat exchange, in the half-moulds it is also possible to provide for cooling channels in which water, which continuously removes heat, circulates.

The mould is then opened by separating the two half-moulds from each other. When the mould is opened, the semi-finished product generally remains integral with the upper half-mould from which it is detached through suitable ejectors which are only cylinders embedded in the half-mould which push on the semi-finished product.

Hot forging processes can be carried out on many families of metal alloys, including steels, copper alloys, aluminium alloys or chromium or nickel superalloys.

With respect to other processes provided in the known art, a hot forging process allows, thanks to the hot forging step, to achieve several advantages as regards the mechanical properties of the final product.

For example, through the deformation and the high pressures applied, all the porosities present in the material are closed.

Moreover, since during the first heating step, the crystallisation temperature of the material is exceeded, after forging, the semi-finished product can be subjected to quick cooling so as to make the micro-structure finer.

Furthermore, through the deformation due to the forging, the micro-structure of the material is oriented in suitable directions so as to achieve a slight degree of anisotropy; if the mould design is optimal, higher mechanical properties can be achieved in the directions which will be more stressed during the use of the final product.

In any case, another fundamental aspect of the hot forging processes relates to the lubrication of the mould, which usually occurs through a specific lubrication step carried out before the insertion of the billet between the half-moulds.

For this purpose, a press combined with a mould is equipped with a spray system comprising shaped tubes which are directed toward the opposite half-mould and which project a so-called lubricating-cooling liquid through suitable nozzles.

Sometimes a spray system of the aforesaid type is arranged in the same mould in which suitable channels are formed to direct the jet of the lubricating-cooling liquid toward the opposite half-mould.

In detail, when the mould is open, the nozzles spray a large amount of the aforesaid liquid which completely wets the surfaces of the half-moulds where the respective recesses or impressions are arranged. The hot billet is then deposited in the mould, e.g. on the lower half-mould, and the real forging step occurs.

The presence of the lubricating-cooling liquid on the surface of the half-moulds determines many benefits for the success of the process.

For example, the presence of the lubricating-cooling liquid reduces the coefficient of friction between billet and mould, favours the sliding of the material, facilitates the complete filling of the mould recess and reduces the force required by the press.

In turn, an easier filling of the mould recess favoured by the low coefficient of friction allows to achieve a manufactured article with a better surface finish.

Furthermore, thanks to the lubricating-cooling liquid, adhesions between the material of the billet and that of the half-moulds are avoided, resulting in improvement of the quality of the manufactured articles, reduction of the wear phenomena and resulting in increased useful life of the mould.

Furthermore, thanks to the lubricating-cooling liquid, the detachment of the manufactured article during the opening of the mould is facilitated, also because less force is required by the ejectors resulting in the reduction of the distortions undergone by the manufactured article and by the half-mould.

Moreover, thanks to the lubricating-cooling liquid, the temperature of the mould, which cycle after cycle could become too high and cause premature degradation, is kept under control.

As regards in detail the lubricating-cooling liquid, it should be stated that, regardless of the lubricating additives used, it may belong to two different categories, i.e. to the category of water-soluble liquids or that of oily liquids.

In particular, water or oil act as a carrier for lubricating additives and evaporate in contact with the surface of the mould, depositing the lubricating additives and cooling the mould by means of the latent heat required for the evaporation.

Therefore, the additives carry out the actual function of lubricants and, during the evaporation of water or oil, they deposit on the half-moulds so as to form a thin film of lubricating substance.

In this regard, it should be stated that the most widely used lubricating additive is graphite which has the great quality of having a very low coefficient of friction, but which in aqueous solution soils the water and causes it assume a black colour.

It should also be added that, in order to ensure the formation of a suitable lubricant layer and a complete covering of the whole surface of the half-moulds involved in the forging, the press manufacturers tend to increase the number of nozzles of the spray system.

In this regard, it should also be considered that, especially in small companies where there are no standardised practices for all the products manufactured, the number and shape of the nozzles, their orientation, the flow rate and duration of the sprayed liquid flow are parameters that in daily operativeness are often left to the subjectivity of the operator who carries out the set-up of the press and of the person in charge of the forging.

Thus, in order to ensure sufficient cooling and lubrication of the half-moulds, the amount of lubricating-cooling liquid sprayed onto the half-moulds tends to be increased, also because the optimisation of the process parameters, such as the amount of liquid sprayed, the number and position of the nozzles, their direction and the lubrication duration is a particularly complex operation which is therefore often not carried out, preferring merely to increase the flow rate of sprayed lubricating-cooling liquid.

The main disadvantage of this type of lubrication lies in the disproportion between the amount of liquid that is cast on the surface to be lubricated and the amount strictly necessary to make the thin film of lubricating substance required by the process. In fact, the jet of liquid sprayed by the nozzles impacts on the surface of the half-moulds and only a small part remains integral therewith, moreover the majority of the lubricating-cooling liquid, after impacting the surface of the half-moulds, is thrown outside the mould, thus soiling the surrounding area.

The following disadvantages result from the above:
inefficient use of the lubricating-cooling liquid, of which only a small part deposits on the surface of the half-moulds and carries out its function, while the remaining part is wasted;
the spreading of a uniform film of lubricating substance and a homogeneous cooling of the surface of the moulds is difficult to achieve and this can lead to have inhomogeneity on the surface or in the micro-structure of the semi-finished product achieved, therefore also on the final product;
the uncontrolled diffusion of the excess lubricating-cooling liquid within the press causes a build-up of dirt which makes maintenance operations more frequent or difficult on the equipment used during the forging process necessary;
the main lubricating additive in the lubricating-cooling liquid (graphite) being black, which causes a progressive reduction in the visibility of the components of the forging area, with the need for more frequent cleaning and more disruptions to the process cycle;
the build-up of the lubricating-cooling liquid on the surface of the press can cause the malfunctioning of certain components and their premature damage;
the dispersed lubricating-cooling liquid not only builds up on the surface of the press components, but forms unwanted mists in the forging environment, which are harmful to health due to the toxicity of the lubricating additives. It is thus necessary to use filtering plants of large dimensions and equipped with high flow rates which increase the energy consumption related to the forging process;
especially in small companies, the set-up of the lubricating-cooling system is left to the subjectivity of the operator and can be difficult to standardise;
the large amount of lubricating-cooling liquid touching the surface of the half-moulds removes a lot of heat and effectively lowers the temperature of the moulds. The temperature of the half-moulds therefore varies over a wide range during each cycle and this causes thermal fatigue which reduces the life of the moulds.

Summarising what has been set forth above, it can be stated that the lubricating-cooling step is fundamental for the hot forging processes, because it basically allows to facilitate the whole process and to get several advantages. In the current state of the art, however, the lubricating-cooling step is also the cause of numerous disadvantages and drawbacks.

DE 10 2011 116885 A1 discloses a device for hot forming and in particular for press hardening a sheet material coated with a metallic anti-corrosion coating, comprising a tool with at least two tool parts which are movable relative to one another for opening and closing the tool and which each connect at least one directly to the coated sheet material, wherein the device further comprises at least one lubricant application device, with which when the tool is open at least one tool effective surface a lubricant can be applied at least in some areas, which can be used during subsequent hot forming or press hardening forms a lubricant film between the coated sheet material and the relevant tool effective surface.

EP 1 186 361 A2 discloses a lubricating hot forging tools comprises electrically and/or electrostatically applying a graphite or graphite-containing powder as lubricant to the surface of the tool before or continuously during its operation.

### Summary of the invention

The technical problem underlying the present invention has been that of providing a mould for hot forging, having structural and functional characteristics such as to overcome one or more of the drawbacks mentioned above with reference to the known art.

In accordance with the invention, the aforesaid problem is solved by a mould for hot forging, comprising:
a first half-mould, e.g. a lower half-mould, and a second half-mould, e.g. an upper half-mould, each comprising a mould holder having a recess, and a die provided with an impression, wherein the die is combined with the respective mould holder at the aforesaid recess,
which is characterised in that at least one of the aforesaid first half-mould and the aforesaid second half-mould is provided with at least one feeding channel for a lubricating-cooling liquid, substantially extending from an outer wall of the mould holder to the recess of the mould holder,
and with a plurality of distribution channels for the lubricating-cooling liquid, wherein at least one quota of the aforesaid plurality of distribution channels comprises distribution channels which extend from a wall of the die facing the aforesaid recess, to the aforesaid impression,
wherein the aforesaid at least one feeding channel and the distribution channels of the aforesaid plurality of distribution channels face at least one gap formed between the mould holder and the respective die at the aforesaid recess.

Preferably, both the aforesaid first half-mould and the aforesaid second half-mould are provided with at least one feeding channel, a plurality of distribution channels and at least one gap of the aforesaid type.

Preferably, the aforesaid plurality of distribution channels comprises distribution channels parallel to each other and/or at least one distribution channel substantially perpendicular to the aforesaid feeding channel, therefore perpendicular to the aforesaid gap and/or at least one non-linear distribution channel and/or at least one distribution channel inclined with respect to the aforesaid feeding channel, therefore with respect to the aforesaid gap, by an angle more preferably between about 5° and about 85°.

If there are multiple inclined distribution channels, i.e. a plurality of inclined distribution channels, at least one quota of said plurality of inclined distribution channels comprises inclined distribution channels which are substantially converging toward the aforesaid impression.

Preferably, the aforesaid at least one quota of the aforesaid plurality of distribution channels comprises at least one non-linear distribution channel comprising a first length substantially perpendicular to the aforesaid feeding channel, therefore perpendicular to the aforesaid gap, and/or a second length substantially perpendicular to the aforesaid impression.

Preferably, the aforesaid distribution channels have a diameter lower than about 0.4 mm, more preferably lower than about 0.3 mm, even more preferably equal to or lower than about 0.2 mm.

In general, however, the size of the distribution channels may vary widely depending on the size of the manufactured article to be achieved and the respective heat requirements, and must however be such as not to compromise the aesthetic appearance of the manufactured article produced.

Preferably, at least one second quota of the aforesaid plurality of distribution channels comprises distribution channels which face a wall of the aforesaid die containing the aforesaid impression in portions of the aforesaid wall, which are outside the aforesaid impression.

In accordance with the above, therefore, the aforesaid second quota of the aforesaid plurality of distribution channels may comprise distribution channels parallel to each other and/or at least one distribution channel substantially perpendicular to the aforesaid feeding channel, therefore perpendicular to the aforesaid gap, and/or at least one non-linear distribution channel and/or at least one distribution channel inclined with respect to the aforesaid feeding channel, therefore with respect to the aforesaid gap, by an angle more preferably between about 5° and about 85°, and/or at least one non-linear distribution channel comprising a first length substantially perpendicular to the aforesaid feeding channel, therefore perpendicular to the aforesaid gap, and/or a second length substantially perpendicular to the aforesaid wall of the die containing the aforesaid impression.

Preferably, the aforesaid mould holder and/or the aforesaid die comprise, at the aforesaid recess and, respectively, at the aforesaid wall facing the aforesaid recess, at least one step.

Preferably, the aforesaid die comprising the aforesaid plurality of distribution channels is at least partially made with additive production techniques and/or with micro-perforation techniques, particularly in case rectilinear distribution channels are provided.

In accordance with the invention, the aforesaid problem is also solved by a hot forging process comprising the steps of:
- a) providing a mould for hot forging, of the aforesaid type;
- b) feeding, under pressure, a lubricating-cooling liquid into the aforesaid at least one feeding channel;
- c) feeding a preheated billet into the aforesaid first half-mould or the aforesaid second half-mould;
- d) closing the aforesaid mould applying a pre-set pressure to the aforesaid first half-mould and/or to the aforesaid second half-mould;
- e) cooling the aforesaid mould;
- f) opening the aforesaid mould;
- g) ejecting a forged semi-finished product achieved from the aforesaid billet.

Preferably, during the whole hot forging process, the aforesaid distribution channels are constantly fed with lubricating-cooling liquid; in other words, the distribution channels are preferably constantly filled with lubricating-cooling liquid during the present process even if, in accordance with the invention, it is not excluded that the pressure in the distribution channels can be reduced during the process, until it is eliminated, if the lubrication of the die is considered sufficient.

Preferably, the aforesaid step g) of ejecting the aforesaid semi-finished product is carried out by increasing the pressure of the aforesaid lubricating-cooling liquid.

In practice, in hot-forging processes, the present invention aims to replace the spray lubricating-cooling systems, in which the sprayed lubricating-cooling liquid travels a certain distance before meeting the surface of interest, with a lubricating-cooling system that allows an almost static diffusion of the lubricating-cooling liquid coming directly from the inside of the mould.

### Brief description of the figures

Further characteristics and advantages of the invention will become better apparent from the following detailed description of some preferred, but not exclusive, embodiments depicted by way of non-limiting example with the support of the accompanying drawings, wherein:
- figure 1 shows a perspective view of a half-mould of a mould for hot forging, comprising a mould holder and a die combined with the mould holder, in accordance with the present invention;
- figure 2 shows a perspective cross-sectional view of the half-mould of figure 1, with respective enlarged detail;
- figure 3 shows a perspective view of the aforesaid mould holder of the half-mould of figure 1;
- figure 4 shows a cross-sectional view of the mould holder of figure 3;
- figure 5 shows a perspective cross-sectional view of the die of the half-mould of figure 1, with respective enlarged detail, in accordance with an implementation variant of the invention;
- figure 6 shows a perspective cross-sectional view of the die of the half-mould of figure 1, with respective enlarged detail, in accordance with a further implementation variant of the invention.

### Detailed description of the invention

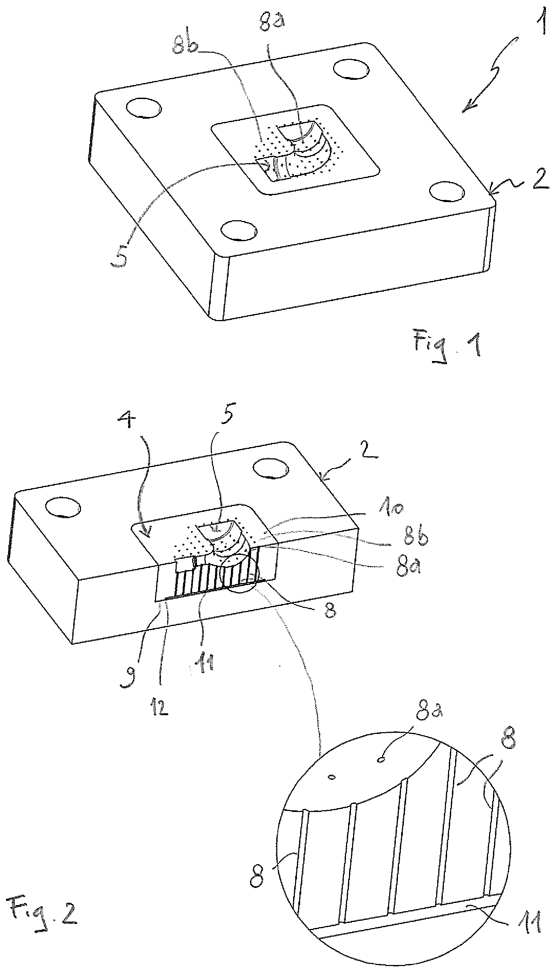

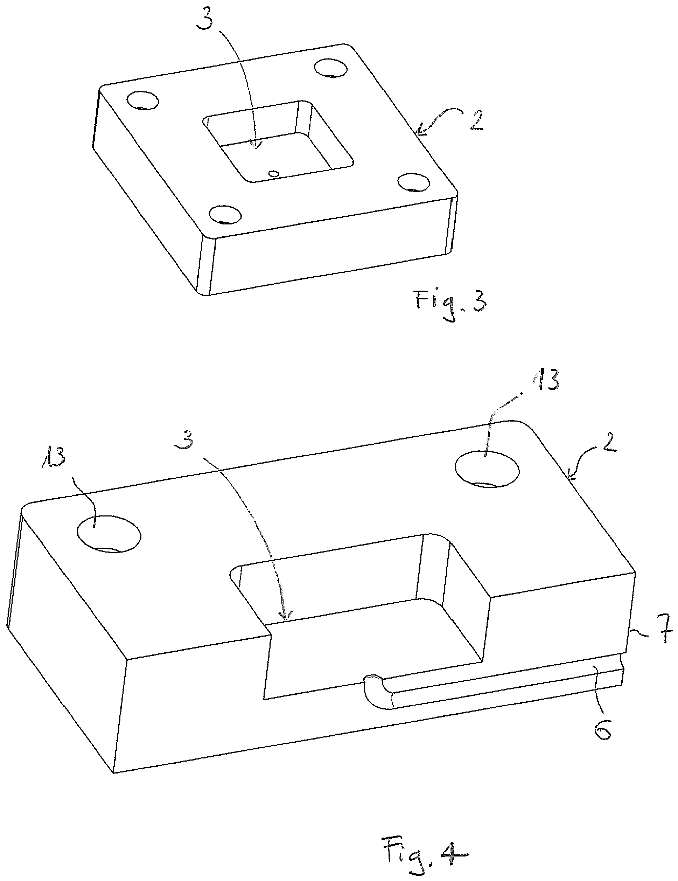

With reference to figures 1-4, **1** generally denotes a half-mould of a mould for hot forging, according to the present invention.

The half-mould **1** can be a so-called lower half-mould or a so-called upper half-mould of the aforesaid mould which, therefore, may optionally comprise two half-moulds substantially similar as regards the structural and functional characteristics in accordance with the present invention.

In detail, the half-mould **1** comprises a mould holder **2** having a recess **3,** and a die **4** provided with an impression **5,** wherein the die **4** is combined with the mould holder **2** at the recess **3.**

In practice, the impression **5** is also a recess that corresponds to the negative of the geometry, or rather of part of the final geometry, of the semi-finished product to be achieved.

In accordance with the invention, the half-mould **1** is provided with a feeding channel **6** for a lubricating-cooling liquid, substantially extending from an outer wall **7** of the mould holder **2** to the recess **3** of the mould holder **2** and with a plurality of distribution channels for the lubricating-cooling liquid, each one denoted by **8,** wherein a quota of the aforesaid plurality of distribution channels consists of distribution channels extending from a wall **9** of the die **4** facing the recess **3,** to the impression **5.**

In practice, a part of the distribution channels **8,** i.e. the distribution channels of the aforesaid quota, have openings **8a** facing the impression **5,** while another part of the distribution channels **8,** basically the distribution channels of a second quota of the aforesaid plurality of distribution channels, have openings **8b** facing a wall **10** of the die **4** in which the impression **5** is arranged, at portions of the wall **10** outside the impression **5.**

Moreover, in accordance with the invention, the feeding channel **6** and the distribution channels **8** face a gap **11** formed between the mould holder **2** and the die **4** at the recess **3.**

Basically, in accordance with the above and according to the present invention, during the use of the half-mould **1,** the lubricating-cooling liquid coming from the feeding channel **6** collects in the gap **11** from which it then reaches the forging surface of the half-mould **1,** at the wall **10** of the die, through the distribution channels **8** which distribute the lubricating-cooling liquid substantially uniformly and homogeneously on the same forging surface, thanks to the surface tension of the lubricating-cooling liquid.

In accordance with the invention, it should be added that the number of distribution channels as well as the respective positions, the respective dimensions, the respective orientations and inclinations may vary, as required, also in a same die, as well as it is possible to provide for more than one feeding channel in the same mould holder and more gaps in the same half-mould. It should be noted that the homogeneity of the lubricating-cooling, i.e. a substantially homogeneous flow of the lubricating-cooling liquid on the surface of interest, is favoured by distribution channels with a direction as perpendicular as possible to the surface to be lubricated.

In this regard, the distribution channels have a diameter preferably lower than about 0.4 mm, more preferably lower than about 0.3 mm, even more preferably equal to or lower than about 0.2 mm, the aforesaid die being preferably at least partially implemented with additive production techniques and preferably being integrally implemented with additive production techniques, without post-processing.

As is known, additive production or additive manufacturing or additive process or layer manufacturing (*Additive Manufacturing* o *AM*) is an industrial process used to manufacture objects by starting from computerised 3D models, adding one layer on top of the other (3D printing), as opposed to the so-called traditional subtractive production methods which use milling machines or lathes and which start from a block of material from which chips or portions are mechanically removed.

The additive production allows to achieve complex geometries that cannot be achieved with the aforesaid traditional methods, without generally increasing the costs to be incurred for the production of the final product which is the object of the hot-forging process.

Again in this regard, in the example of the aforesaid figures, distribution channels **8** are shown parallel to each other and perpendicular to the feeding channel **6,** and therefore perpendicular to the gap **11.**

It should be noted that in the example of the aforesaid figures, all the distribution channels **8,** both those having the opening **8a** facing the impression **5** and those having the opening **8b** facing outside the impression **5,** are parallel to each other and substantially perpendicular to the feeding channel **6,** therefore perpendicular to the gap **11,** the possibility of providing, in addition to or in place of, the aforesaid distribution channels parallel to each other being however not excluded, one or more distribution channels inclined with respect to the feeding channel, therefore inclined with respect to the gap, by an angle between about 5° and about 85°, and/or one or more non-linear distribution channels, as will better appear hereinafter.

It should also be added that, in order to make the gap **11,** the die **4** is provided, at the aforesaid wall **9,** with a step **12,** the possibility of providing for such a step also, or only, at the recess **3** of the mould holder **2** being however not excluded, as well as it is possible to provide for steps capable of making more than one gap of the aforesaid type and as well as it is possible to provide for other means capable of making at least one gap of the aforesaid type, e.g. spacers.

In the example of the aforesaid figures, the half-mould **1** is also shown with holes **13** adapted to be engaged by the columns of a press provided for carrying out hot forging with the present mould.

Finally, it should be added that the mould holder **2** preferably consists of a forged steel block which can be used to implement several pieces, i.e. several semi-finished products, and which can be provided with a plurality of inner channels for cooling circuits, of a known type, in the examples of the figures not depicted.

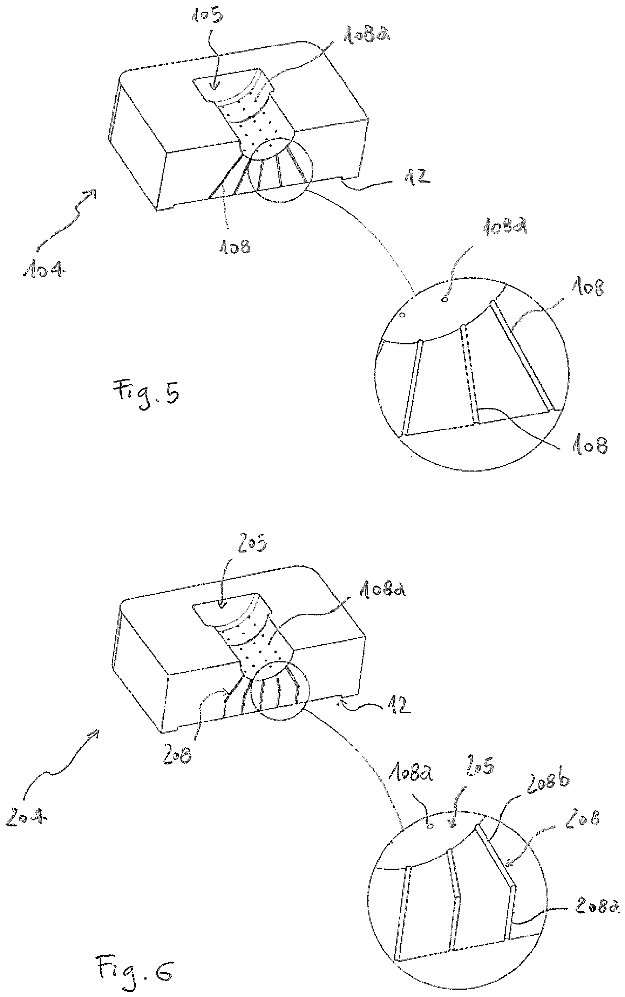

Figure 5 shows the die of the half-mould of figure 1 in accordance with an implementation variant of the invention, in which parts structurally and functionally corresponding to those of the die **4** described above retain the same reference numerals of figures 1-4.

In detail, the example of figure 5 shows a die **104** which is entirely similar to the die **4,** the description of which is set forth above, except for the fact that it comprises distribution channels **108** for the lubricating-cooling liquid, which are inclined, not parallel to each other and converging toward an impression **105,** as mentioned above.

In the example of figure 5, a step **12** of the die **104** is also depicted, which is adapted to form a gap with the recess of the respective mould holder which, in this case, may be a mould holder entirely similar to the mould holder **2** referred above, the description of which is provided above.

In the example of figure 5, moreover, the die **104** is provided only with distribution channels **108** which have the respective openings **108a** facing the impression **105.**

Figure 6 shows the die of the half-mould of figure 1 in accordance with a further implementation variant of the invention, in which parts structurally and functionally corresponding to those of the die **4** described above, retain the same reference numerals of figures 1-4.

In detail, the example of figure 6 shows a die **204** entirely similar to the die **4,** the description of which is provided above, except for the fact that it comprises non-linear distribution channels **208** for the lubricating-cooling liquid, as mentioned above.

In detail, the distribution channels **208** comprise a first length **208a** substantially perpendicular to a gap which the die **204** forms with a recess of the respective mould holder, in the example of figure 6 not shown, and a second length **208b** substantially perpendicular to an impression **205** provided in the die **204.**

In the example of figure 6, a step **12** of the die **204** is also depicted, which is adapted to form the aforesaid gap with the recess of the mould holder which, in this case, may be a mould holder entirely similar to the mould holder **2** referred above, the description of which is provided above.

Moreover, in the example of figure 6, the die **204** is provided only with distribution channels **208** which have the respective opening **108a** facing the impression **205.**

A die in accordance with the example of figure 6 makes the most of the potentials of additive production, since it allows to direct the flow of the lubricating-cooling liquid to a direction substantially perpendicular both to its inlet in the distribution channels and to its outlet from the distribution channels.

In accordance with the foregoing, a hot forging process according to the present invention is now described, which comprises the steps of:
- a) providing a mould for hot forging of the type described above, i.e. comprising a first half-mould and a second half-mould in which at least one half-mould **1** between the first half-mould and the second half-mould comprises a mould holder **2** having a recess **3,** and a die **4, 104, 204** provided with an impression **5, 105, 205,** in which the die **4, 104, 204** is combined with the mould holder **2** at the recess **3,** wherein the half-mould **1** is provided with a feeding channel **6** for a lubricating-cooling liquid, which is substantially extending from an outer wall **7** of the mould holder **2** to the recess **3** of the mould holder **2,** and with a plurality of distribution channels **8, 108, 208** for the lubricating-cooling liquid, wherein at least one quota of the distribution channels **8, 108, 208** comprises distribution channels extending from a wall **9** of the die **4, 104, 204** facing the recess **3,** to the impression **5, 105, 205,** wherein the feeding channel **6** and the distribution channels **8, 108, 208** face a gap **11** formed between the mould holder **2** and the die **4, 104, 204** at the recess **3** of the mould holder **2;**
- b) feeding, under pressure, the lubricating-cooling liquid into the feeding channel **6;**
- c) feeding a preheated billet into the first half-mould or the second half-mould of the mould;
- d) closing the mould by applying a pre-set pressure to the first half-mould and/or to the second half-mould;
- e) cooling the mould;
- f) opening the mould;
- g) ejecting a forged semi-finished product achieved from the aforesaid billet.

Advantageously, in accordance with the invention, the aforesaid step b) in which the lubricating-cooling liquid is fed into the feeding channel **6,** allows to lubricate, in a substantially homogeneous manner, the forging surface of the half-mould **1,** considering also that, during the present process, the aforesaid distribution channels are preferably constantly crossed by the lubricating-cooling liquid, i.e. they are preferably substantially always full of lubricating-cooling liquid during the process.

This way, having defined, during the die designing step, the number of channels for distributing the lubricating-cooling liquid, the position of the distribution channels, their diameter, their orientation and their inclination, it is possible to have the pressure applied to the lubricating-cooling liquid as the only process parameter.

Advantageously, moreover, if necessary, the lubricating-cooling liquid may also be used to eject the semi-finished product achieved by forging. In this regard, in the present process, the aforesaid step g) may be carried out by increasing the pressure of the lubricating-cooling liquid. In fact, due to the presence of the semi-finished product inside the mould which blocks the distribution channels of the die, the lubricating-cooling liquid may be compressed inside the same distribution channels until the semi-finished product is detached, all controlled by an automated control unit.

Furthermore, the use of the lubricating-cooling liquid to eject the semi-finished product advantageously allows to make moulds without the classic ejectors, thus reducing the complexity of the mould holders.

As regards the lubricating-cooling liquid, it should be stated that it is possible to use any lubricating-cooling liquid of known type.

The advantages of the present invention, which are evident in the above description, can be summarised by pointing out that a mould for hot forging has been provided in which the traditional spray lubrication system is replaced by a diffusion system from the inside of the mould, or rather of the half-mould, of the lubricating-cooling liquid, which substantially entails:
for the lubrication, only using the lubricating-cooling liquid necessary to form a thin film on the forging surface of a half-mould, without waste;
reducing the lubricating-cooling liquid dispersed in the mould and in the entire equipment comprising the mould, resulting in less frequent cleaning and maintenance operations, thus lengthening the operating useful life of the mould and the respective equipment;
dispersing the lubricating-cooling liquid in the surrounding environment is avoided and, therefore, the need to resort to constantly active suction systems is avoided, resulting in reduced energy consumption;
during the die designing step, the distribution of the lubricating-cooling liquid reaching the forging surface can be effectively envisaged, by defining the number, position, orientation, inclination and diameter of the channels for distributing the lubricating-cooling liquid, therefore being able to control effectively, during the process, the distribution of the lubricating-cooling liquid reaching the forging surface;
during the process, the lubrication step becomes simpler to manage, since the only parameter to be managed consists of the pressure applied to the lubricating-cooling liquid as time varies, a pressure which can therefore be advantageously controlled by a PLC system.

In the embodiments depicted and described, in order to satisfy contingent and specific requirements, a person skilled in the art may make numerous variations and modifications to the present invention, all of which are within the scope of protection of the invention as defined by the following claims.

## Claims

1. Mould for hot forging, comprising:
a first half-mould (1) and a second half-mould, each comprising a mould holder (2) having a recess (3), and a die (4) provided with an impression (5), wherein the die (4) is combined with the mould holder (2) at the recess (3),
**characterised in that** at least one of said first half-mould and said second half-mould is provided
with at least one feeding channel (6) to feed a lubricating-cooling liquid, extended from an outer wall (7) of the mould holder (2) to the recess (3) of the mould holder, and
with a plurality of distribution channels (8) for the lubricating-cooling liquid, wherein at least one quota of said plurality of distribution channels comprises distribution channels, which extend from a wall (9) of the die (4) facing said recess (3), to said impression (5),
wherein said at least one feeding channel (6) and the distribution channels (8) of said plurality of distribution channels face at least one gap (11) formed between the mould holder (2) and the respective die (4) at said recess (3).

2. Mould according to claim 1, wherein said plurality of distribution channels comprises distribution channels (8) parallel to each other.

3. Mould according to claim 1, wherein said plurality of distribution channels comprises at least one distribution channel substantially perpendicular to said feeding channel and/or said gap.

4. Mould according to claim 1, wherein said plurality of distribution channels comprises at least one distribution channel (108) inclined with respect to said feeding channel and/or said gap, preferably by an angle of between about 5° and about 85°.

5. Mould according to claim 4, comprising a plurality of inclined distribution channels (108), wherein at least one quota of said plurality of inclined distribution channels comprises inclined distribution channels (108), which are substantially converging toward said impression (105).

6. Mould according to claim 1, wherein said plurality of distribution channels comprises at least one non-linear distribution channel (208).

7. Mould according to claim 1 or 6, wherein said at least one quota of said plurality of distribution channels comprises at least one non-linear distribution channel (208) comprising a first length (208a) substantially perpendicular to said feeding channel and/or said gap, and/or a second length (208b) substantially perpendicular to said impression (205).

8. Mould according to any one of the preceding claims, wherein said distribution channels have a diameter lower than about 0.4 mm, preferably lower than about 0.3 mm, more preferably equal to or lower than about 0.2 mm.

9. Mould according to any one of the preceding claims, wherein at least one second quota of said plurality of distribution channels comprises distribution channels that have respective openings (8b) facing a wall (10) of said die (4) containing said impression (5) in portions of said wall (10), which are outside said impression (5).

10. Mould according to any one of the preceding claims, wherein said mould holder and/or said die comprise, at said recess and, respectively, at said wall facing said recess, at least one step (12).

11. Mould according to any one of the preceding claims, wherein both said first half-mould and said second half-mould are provided with said at least one feeding channel (6) for the lubricating-cooling liquid, with said plurality of distribution channels (8) for the lubricating-cooling liquid and with said at least one gap (11).

12. Hot forging process comprising the steps of:
- a) providing a mould according to any one of the preceding claims;
- b) feeding, under pressure, a lubricating-cooling liquid into said at least one feeding channel (6);
- c) feeding a preheated billet into said first half-mould (1) or said second half-mould;
- d) closing said mould by applying a pre-set pressure to said first half-mould and/or to said second half-mould;
- e) cooling said mould;
- f) opening said mould;
- g) ejecting a forged semi-finished product obtained from said billet.

13. Process according to claim 12, wherein during the process, said distribution channels are substantially and constantly filled with said lubricating-cooling liquid.

14. Process according to claim 12 or 13, wherein said step g) of ejecting said semi-finished product is carried out by increasing the pressure of said lubricating-cooling liquid.

## Patentansprüche

1. Form zur Warmumformung, umfassend:
eine erste Halbform (1) und eine zweite Halbform, die jeweils einen Formhalter (2) mit einer Ausnehmung (3) und eine mit einem Abdruck (5) versehene Matrize (4) umfassen, wobei die Matrize (4) mit dem Formhalter (2) im Bereich der Ausnehmung (3) verbunden ist,
**dadurch gekennzeichnet, dass** mindestens eine der ersten Halbform und der zweiten Halbform
mit mindestens einem Zuführkanal (6) zum Zuführen einer Schmierkühlflüssigkeit, der sich von einer Außenwand (7) des Formhalters (2) zu der Ausnehmung (3) des Formhalters erstreckt, und
mit einer Vielzahl von Verteilerkanälen (8) für die Schmierkühlflüssigkeit versehen ist, wobei mindestens ein Anteil der Vielzahl von Verteilerkanälen Verteilerkanäle umfasst, die sich von einer der Ausnehmung (3) zugewandten Wand (9) der Form (4) zu dem Abdruck (5) erstrecken,
wobei der mindestens eine Zuführkanal (6) und die Verteilerkanäle (8) der Vielzahl von Verteilerkanälen mindestens einem Spalt (11) zugewandt sind, der zwischen dem Formhalter (2) und der jeweiligen Matrize (4) im Bereich der Ausnehmung (3) ausgebildet ist.

2. Form nach Anspruch 1, wobei die Vielzahl von Verteilerkanälen zueinander parallele Verteilerkanäle (8) umfasst.

3. Form nach Anspruch 1, wobei die Vielzahl von Verteilerkanälen mindestens einen Verteilerkanal umfasst, der im Wesentlichen senkrecht zu dem Zuführkanal und/oder dem Spalt ist.

4. Form nach Anspruch 1, wobei die Vielzahl von Verteilerkanälen mindestens einen Verteilerkanal (108) umfasst, der in Bezug auf den Zuführkanal und/oder den Spalt geneigt ist, vorzugsweise um einen Winkel zwischen etwa 5° und etwa 85°.

5. Form nach Anspruch 4, umfassend eine Vielzahl von geneigten Verteilerkanälen (108), wobei mindestens ein Anteil der Vielzahl von geneigten Verteilerkanälen geneigte Verteilerkanäle (108) umfasst, die im Wesentlichen in Richtung des Abdrucks (105) konvergieren.

6. Form nach Anspruch 1, wobei die Vielzahl von Verteilerkanälen mindestens einen nicht-linearen Verteilerkanal (208) umfasst.

7. Form nach Anspruch 1 oder 6, wobei das mindestens ein Anteil der Vielzahl von Verteilungskanälen mindestens einen nicht-linearen Verteilungskanal (208) umfasst, der eine erste Länge (208a), die im Wesentlichen senkrecht zu dem Zuführkanal und/oder dem Spalt ist, und/oder eine zweite Länge (208b), die im Wesentlichen senkrecht zu dem Abdruck (205) ist, aufweist.

8. Form nach einem der vorhergehenden Ansprüche, wobei die Verteilerkanäle einen Durchmesser von weniger als etwa 0,4 mm, vorzugsweise von weniger als etwa 0,3 mm, besonders bevorzugt von gleich oder weniger als etwa 0,2 mm aufweisen.

9. Form nach einem der vorhergehenden Ansprüche, wobei mindestens ein zweiter Anteil der Vielzahl von Verteilerkanälen Verteilerkanäle umfasst, die entsprechende Öffnungen (8b) aufweisen, die in eine Wand (10) der Form (4) münden, welche Wand den Abdruck (5) in außerhalb des Abdrucks (5) befindenden Abschnitten der Wand (10) enthält.

10. Form nach einem der vorhergehenden Ansprüche, wobei der Formhalter und/oder die Form im Bereich der Ausnehmung bzw. der der Ausnehmung zugewandten Wand mindestens eine Stufe (12) aufweist.

11. Form nach einem der vorhergehenden Ansprüche, wobei sowohl die erste Halbform als auch die zweite Halbform mindestens einen Zuführkanal (6) für die Schmierkühlflüssigkeit mit der Vielzahl von Verteilerkanälen (8) für die Schmierkühlflüssigkeit und mit dem mindestens einen Spalt (11) aufweisen.

12. Verfahren zur Warmumformung, umfassend die Schritte:
- a) Bereitstellen einer Form nach einem der vorhergehenden Ansprüche;
- b) Zuführen einer Schmierkühlflüssigkeit unter Druck in den mindestens einen Zuführkanal (6);
- c) Zuführen eines vorgewärmten Knüppels in die erste Halbform (1) oder die zweite Halbform;
- d) Schließen der Form durch Aufbringen eines voreingestellten Drucks auf die erste Halbform und/oder auf die zweite Halbform;
- e) Abkühlen der Form;
- f) Öffnen der Form;
- g) Ausstoßen eines geschmiedeten Halbzeugs, das aus dem Knüppel erhalten wurde.

13. Verfahren nach Anspruch 12, wobei während des Verfahrens die Verteilerkanäle im Wesentlichen und konstant mit der Schmierkühlflüssigkeit gefüllt sind.

14. Verfahren nach Anspruch 12 oder 13, wobei der Schritt g) des Ausstoßens des Halbzeugs durch Erhöhung des Drucks der Schmierkühlflüssigkeit erfolgt.

## Revendications

1. Moule de moulage à chaud, comprenant:
un premier demi-moule (1) et un second demi-moule, chacun comprenant un porte-moule (2) ayant une cavité (3) et une matrice (4) pourvue d'une empreinte (5), dans lequel la matrice (4) est associée au porte-moule (2) en correspondance de la cavité (3),
**caractérisé en ce que** au moins un entre ledit premier demi-moule et ledit second demi-moule est pourvu
d'au moins un canal d'alimentation (6) pour alimenter un liquide de lubrification et de refroidissement, s'étendant d'une paroi externe (7) du porte-moule (2) jusqu'à la cavité (3) du porte-moule, et
d'au moins une pluralité de canaux de distribution (8) pour le liquide de lubrification et de refroidissement, dans lequel au moins une fraction de ladite pluralité de canaux de distribution comprend des canaux de distribution s'étendant d'une paroi (9) de la matrice (4) faisant face ladite cavité (3), jusqu'à ladite empreinte (5),
dans lequel ledit au moins un canal d'alimentation (6) et les canaux de distribution (8) de ladite pluralité de canaux de distribution font face à un au moins un vide (11) formé entre le porte-moule (2) et la matrice (4) respective en correspondance de ladite cavité (3).

2. Moule selon la revendication 1, dans lequel ladite pluralité de canaux de distribution comprend des canaux de distribution (8) parallèles les uns aux autres.

3. Moule selon la revendication 1, dans lequel ladite pluralité de canaux de distribution comprend au moins un canal de distribution sensiblement perpendiculaire audit canal d'alimentation et/ou audit vide.

4. Moule selon la revendication 1, dans lequel ladite pluralité de canaux de distribution comprend au moins un canal de distribution (108) incliné par rapport audit canal d'alimentation et/ou audit vide, de préférence d'un angle compris entre environ 5° et environ 85°.

5. Moule selon la revendication 4, comprenant une pluralité de canaux de distribution inclinés (108), dans lequel au moins une fraction de ladite pluralité de canaux de distribution inclinés comprend des canaux de distribution inclinés (108) convergeant sensiblement vers ladite empreinte (105).

6. Moule selon la revendication 1, dans lequel ladite pluralité de canaux de distribution comprend au moins un canal de distribution non linéaire (208).

7. Moule selon la revendication 1 ou 6, dans lequel ledit au moins une fraction de ladite pluralité de canaux de distribution comprend au moins un canal de distribution non linéaire (208) comprenant un premier tronçon (208a) sensiblement perpendiculaire audit canal d'alimentation et/ou audit vide, et/ou un second tronçon (208b) sensiblement perpendiculaire à ladite empreinte (205).

8. Moule selon l'une quelconque des revendications précédentes, dans lequel lesdits canaux de distribution ont un diamètre inférieur à environ 0,4 mm, de préférence inférieur à environ 0,3 mm, de préférence égal à ou inférieur à environ 0,2 mm.

9. Moule selon l'une quelconque des revendications précédentes, dans lequel au moins une seconde fraction de ladite pluralité de canaux de distribution comprend des canaux de distribution ayant des ouvertures (8b) respectives faisant face à une paroi (10) de ladite matrice (4) contenant ladite empreinte (5) dans portions de ladite paroi (10), qui se trouvent à l'extérieur de ladite empreinte (5).

10. Moule selon l'une quelconque des revendications précédentes, dans lequel ledit porte-moule et/ou ladite matrice comprennent au moins un gradin (12), en correspondance de ladite cavité et respectivement en correspondance de ladite paroi faisant face à ladite cavité.

11. Moule selon l'une quelconque des revendications précédentes, dans lequel ledit premier demi-moule et ledit second demi-moule sont tous deux pourvu dudit au moins un canal d'alimentation (6) pour le liquide de lubrification et de refroidissement, de ladite pluralité de canaux de distribution (8) pour le liquide de lubrification et de refroidissement et dudit au moins un vide (11).

12. Procédé de moulage à chaud comprenant les étapes de:
- a) mettre à disposition un moule selon l'une quelconque des revendications précédentes;
- b) alimenter un liquide de lubrification et de refroidissement sous pression dans ledit au moins un canal d'alimentation (6);
- c) alimenter une billette préchauffée dans ledit premier demi-moule (1) ou ledit second demi-moule;
- d) fermer ledit moule en appliquant une pression prédéfinie audit premier demi-moule et/ou audit second demi-moule;
- e) refroidir ledit moule;
- f) ouvrir ledit moule;
- g) éjecter un produit semi-fini moulé obtenu à partir de ladite billette.

13. Procédé selon la revendication 12, dans lequel, pendant le procédé, lesdits canaux de distribution sont sensiblement et constamment remplis avec ledit liquide de lubrification et de refroidissement.

14. Procédé selon la revendication 12 ou 13, dans lequel ladite étape g) d'éjecter ledit produit semi-fini est effectuée en augmentant la pression dudit liquide de lubrification et de refroidissement.
